# EUROPÄISCHE PATENTANMELDUNG

(11) **EP 1 980 295 A2**
(43) Veröffentlichungstag der Anmeldung: **15.10.2008**
(21) Anmeldenummer: 08101779.0
(22) Anmeldetag: 20.02.2008
(51) Int. Cl.: A62D 1/00

(54) **Silicontensidzusammensetzungen und deren Verwendung zur Erzeugung von Schaum**

(30) Priorität: 10.04.2007 DE 102007016966
(71) Anmelder: Evonik Goldschmidt GmbH, 45127 Essen (DE)
(72) Erfinder: Brückner, Arndt, Dr., 45473 Mülheim a.d. Ruhr (DE); Kuppert, Dirk, Dr., 45657 Recklinghausen (DE)

(57) **Zusammenfassung**

Die vorliegende Erfindung betrifft siliziumorganische Verbindungen aufweisende Zusammensetzungen zur Erzeugung von Schäumen, wobei die siliziumorganischen Verbindungen Sulfonatgruppen und Si-O-C-Verknüpfungen aufweisen, sowie die Verwendung dieser Zusammensetzungen zur Herstellung von wässrigen Schäumen, insbesondere Feuerlöschschäumen und Reinigungsschäumen.

## Beschreibung

Die Erfindung betrifft die Verwendung von Sulfonatgruppen enthaltender siliziumorganischer Verbindungen zur Erzeugung von wässrigem Schaum, der an hydrophoben Flüssigkeiten angewendet werden kann, sowie auf erfindungsgemäße schaumbildende Stoffzusammensetzungen.

Wässrige Schäume sind für vielfältige Anwendungszwecke geeignet, beispielsweise im Bereich der Kosmetik zur Erzeugung von Rasierschaum oder Haarpflegemitteln, im häuslichen oder industriellen Bereich zu Reinigungszwecken, zur Unterdrückung von Staubbildung, zur Papierherstellung, für Färbeprozesse, zur Fraktionierung oder Separation von Metallen oder deren Salze, zur Isolierung von Eisflächen, zur Beton- bzw. Zementherstellung, zum Schutz von Oberflächen, Bauten oder Vegetation vor Feuer und/oder Hitze, zur Feuerbekämpfung, darunter auch von Bränden in Minen, sowie zum Frostschutz von Pflanzen. Zur näheren Erläuterung einiger dieser Anwendungen sei auf A. R. Aidun, C. S. Grove Jr., D. N. Meldrum, Novel Uses of Aqueous Foams, Chem. Eng. 1964, 71, 145-148, verwiesen. Darüber hinaus besteht ein Bedarf an Schäumen für Anwendungen, bei denen der Schaum mit nichtwässrigen Flüssigkeiten in Kontakt kommt, wie beispielsweise organischen Lösemitteln oder petrochemischen Brenn- und Treibstoffen und bei denen der Schaum über eine ausreichende Stabilität und Fließfähigkeit verfügen muss. Zu diesen Anwendungen zählt unter anderem die Reinigung von Anlagen wie Tanklagern, Rohren, Pipelines oder Kesseln, die Verringerung von Verdampfungsverlusten flüchtiger Kohlenwasserstoffe oder anderer organischer Lösemittel oder die Feuerbekämpfung. So ist es bekannt, Brände, insbesondere von Brenn- und Treibstoffen, durch Aufgeben zusammenhängender Schaumdecken zu bekämpfen. Solche Schaumdecken eignen sich auch zur Verhinderung des Entstehens von Bränden. Zur Erzeugung dieser Schäume werden üblicherweise Schaummittel verwendet, die einen wasserhaltigen Film zwischen Schaum und brennbarer Flüssigkeit bilden ("Aqueous Film Forming Foam" - AFFF oder A3F). Dieser Film sorgt für die rasche Ausbreitung des Schaums und für eine dampfdichte Barriere und verhindert damit die Wiederentzündung. Als wesentlichen Bestandteil enthalten AFFF Tenside mit perfluorierten Gruppen. Derartige Schaummittelzusammensetzungen sind beispielsweise in den Schriften DE-12 16 116, EP-A-0 595 772, US-4,420,434, DE-23 57 281 beschrieben.

In der DE-22 40 263 werden schaumbildende Stoffzusammensetzungen beansprucht, die aus
a) einem Schäummittel, das beispielsweise ein langkettiges Polysiloxan mit angebundenen Sulfatgruppen sein kann,
b) einer S- oder O-(Niederalkyl)-substituierten Oxisäure des Schwefels oder ein Salz derselben sowie unbedingt
c) einem oberflächenaktiven Mittel aus Fluorkohlenstoff bestehen.

Die DE-18 12 531 (US-3,655,555) offenbart, dass wasserlösliche Polysiloxane als Solubilisierungsmittel für organische Fluorverbindungen zur Erzeugung wässriger Feuerlöschschaumkonzentrate eingesetzt werden können.

Aus US-3,849,315, US-4,038,195, US-3,957,657 und US-3,957,658 sind Silicontenside enthaltende Löschschaummischungen bekannt, die die Anwesenheit von Tensiden mit perfluorierten Gruppen erfordern. Die Mischungen aus Tensiden mit perfluorierten Gruppen und Silicontensid sind selbst nicht ausreichend schäumend und müssen daher durch Zusatz von Tensiden, die weder perfluorierte Gruppen noch Siliziumatomen enthalten, in ihrer Verschäumbarkeit verbessert werden. Die beschriebenen Silicontenside sind im Unterschied zu den erfindungsgemäßen Verbindungen rein SiC-verknüpft, das heißt, der die ionische Ladung tragende Rest ist nur durch eine Si-C-Bindung und nicht zu gewissen Anteilen auch über eine Si-O-Bindung an den siliziumorganischen Rest gebunden.

Die Schriftenfamilie DE-28 26 224, WO-A-80/01883, US-4,464,267, US-4,387,032, US-4,060,489, US-4,149,599 und US-4,060,132 lehrt Feuerlöschschaummittel für brennende hydrophile Flüssigkeiten, die ein Polysaccharid und gegebenenfalls Silicone und/oder Fluorkohlenwasserstoffe enthalten. Die Fluorkohlenwasserstoffe können gegebenenfalls auch weggelassen werden, doch deren Anwesenheit macht die Formulierung nach Verdünnung und Verschäumen erst zu wirksamen Feuerlöschern auf hydrophoben Flüssigkeiten wie Benzin. Die oberflächenaktiven Silicone oder die Fluorkohlenwasserstoffe dienen dort zur Erzeugung eines wässrigen Filmes, schäumen aber selbst nicht in ausreichendem Maße. Noch weitere, oberflächenaktive Substanzen, die weder Fluorkohlenwasserstoffe noch Silicone sind, sind nötig, um den Mitteln die gewünschte Schäumbarkeit zu verleihen. Die beschriebenen Silicontenside sind im Unterschied zu den erfindungsgemäßen Verbindungen rein SiC-verknüpft, das heißt, der die ionische Ladung tragende Rest ist nur durch eine Si-C-Bindung und nicht zu gewissen Anteilen auch über eine Si-O-C-Bindung an die siliziumorganische Verbindung gebunden.

Im Rahmen zunehmenden Umweltbewusstseins sind fluorhaltige Verbindungen aufgrund ihrer extrem geringen biologischen Abbaubarkeit und mitunter hohen Verweilzeit in Organismen in den letzten Jahren jedoch zunehmend in die Kritik geraten (M. Fricke, U. Lahl, Risikobewertung von Perfluortensiden als Beitrag zur aktuellen Diskussion zum REACH-Dossier der EU-Kommission, UWSF - Z. Umweltchem. Ökotox. 2005, 17, 36-49). Im Jahre 2005 schlug das Land Schweden im Rahmen der "Stockholm Convention on Persistent Organic Pollutants" einen weltweiten Bann für Perfluoroctansulfonate (PFOS) vor - gebräuchlichen Inhalts- und Ausgangsstoffen für AFFF. Der Fachmann kann erwarten, dass die Verwendung von Tensiden mit perfluorierten Gruppen aus Umwelt-und Gesundheitsschutzgründen künftig eingeschränkt wird, und diese, auch wenn ihre Verwendung für Löschanwendungen ausnahmsweise gestattet bleiben sollte, aufgrund des verringerten Produktionsvolumens nur zu steigenden Preisen zur Verfügung stehen werden. Es besteht daher ein Bedarf an Schaummitteln, die für die Bekämpfung von Lösemittel-, Treib- und Brennstoffbränden geeignet sind und die ohne oder zumindest mit einem deutlich verringerten Anteil an Tensiden mit perfluorierten Gruppen auskommen.

Die Anmeldeschrift WO-A-2004/112907 offenbart ein Schaummittelkonzentrat auf der Basis hochmolekularer Polymere mit sauren Funktionalitäten in Kombination mit Metallsalzen, das keine organischen Fluorverbindungen erfordert. Unter die dort beschriebenen Metallsalze fallen die toxischen Salze von beispielsweise Antimon, Barium, Kupfer, Thallium oder Zinn.

Es ist Stand der Technik, dass siliziumorganische Verbindungen mit Sulfat- und/oder Sulfonatgruppen wässrige Schäume bilden können. In DE-17 45 514 (US-3,513,183) werden Siliconsulfate und deren Verwendung als Netzmittel und Emulgatoren beschrieben. US-4,960,845 beschreibt die Verwendung von siliziumorganischen Verbindungen, die sulfatierte Polyetherreste tragen. Sulfonierte Polyether werden nicht erwähnt. Ebenso findet die Verwendung als Tenside zum Löschen von Bränden keine Erwähnung. US-B-6,777,521 offenbart Verbindungen, die sulfatierte Gruppen der Art Si(CH₂)₃-O-CH₂-CH(OH)-CH₂-SO₄⁻ tragen und deren Verwendung in Polyurethanschäumen und kosmetischen Formulierungen. Die Verwendung als Tensid zum Erzeugen von Löschschaum für die Bekämpfung von Bränden wird nicht offenbart. Die offenbarten Verbindungen zeigen unbefriedigendes Schäumungsvermögen auf hydrophoben Flüssigkeiten.

In der Offenlegungsschrift DE-16 68 759 (US-3,507,897) werden oberflächenaktive Mittel auf Basis von Organosiliziumverbindungen, die Sulfonatgruppen enthalten und deren Verwendung als schäumendes Mittel, Emulgatoren und Netzmittel beschrieben. Die Organosiliziumverbindungen sind dadurch gekennzeichnet, dass sie Gruppierungen der Art -Si (CH₂)₃-O-CH₂-CH(OH) -CH₂-SO₃- enthalten.

Die Offenlegungsschrift DE-1 768 252 (US-3,531,417) lehrt die Herstellung Sulfonatgruppen enthaltender Polyethersiloxane und erwähnt deren Eignung als Schäummittel. Die Verwendung als Tensid zum Erzeugen von Löschschaum für die Bekämpfung von Bränden wird nicht offenbart. Die offenbarten Verbindungen zeigen unbefriedigendes Schäumungsvermögen auf hydrophoben Flüssigkeiten.

Aufgabe der vorliegenden Erfindung war die Bereitstellung von alternativen Zusammensetzungen zur Erzeugung von Schäumen, die einen oder mehrere Nachteile der Konzentrate des Standes der Technik nicht aufweisen. Besonders bevorzugt sollten die aus den Zusammensetzungen erzeugten Schäume ohne oder mit einer nur geringen Zugabe von fluorhaltigen Verbindungen über eine hohe Stabilität auf hydrophoben Flüssigkeiten verfügen. Die alternativen Zusammensetzungen sollten außerdem einfach und kostengünstig herzustellen sein.

Überraschenderweise wurde gefunden, dass diese Aufgabe durch Zusammensetzungen gelöst wird, die Sulfonatgruppen enthaltende siliziumorganische Verbindungen aufweisen, die Si-O-C-Verknüpfungen aufweisen. Aus dem Stand der Technik lässt sich weder ein verbessertes Schaumverhalten ganz oder teilweise Si-O-C-verknüpfter Sulfonatgruppen enthaltender siliziumorganischer Verbindungen, noch die Verwendung dieser Verbindungen als Schaummittel zur Feuerbekämpfung, insbesondere zur Bekämpfung von Brenn- und Treibstoffbränden, ohne den zwingend notwendigen Zusatz von Tensiden mit perfluorierten Gruppen entnehmen oder ableiten. Die Eignung als Löschschaum ist für den Fachmann vor allem insofern völlig unerwartet, als dass nach dem Stand der Technik für Löschschaumanwendungen eingesetzte Sulfonatgruppen enthaltende siliziumorganische Verbindungen stets die Anwesenheit von Tensiden mit perfluorierten Gruppen zur Erzeugung von an bzw. auf hydrophoben Flüssigkeiten anwendbaren Schäumen hoher Stabilität erfordern.

Gegenstand der vorliegenden Erfindung ist deshalb eine siliziumorganische Verbindungen aufweisende Zusammensetzung zur Erzeugung von Schäumen (Schaummittel), welche dadurch gekennzeichnet ist, dass die Zusammensetzung eine oder mehrere siliziumorganische Verbindungen enthält, die
a) mindestens eine Siloxaneinheit der Formel (I)

   R¹_{w}(R²O)ₓSiO_{[4-(w+x)]/2} (I),

   mit
   - R¹ und R²: ein oder mehrere, gleiche oder verschiedene, voneinander unabhängige Reste, ausgewählt aus linearen oder verzweigten, gesättigten, ein- oder mehrfach ungesättigten Alkyl-, Halogenalkyl-, Aryl-, Alkylaryl- oder Arylalkylresten mit 1 bis 30 Kohlenstoffatomen, wobei die Reste gegebenenfalls durch ein oder mehrere Sauerstoff- und/oder Stickstoff-Atome unterbrochen sein können und/oder am Ende des Rests gegebenenfalls eine -OC(O)CH₃ Gruppe aufweisen können,
   - w: 0, 1, 2 oder 3 und
   - x: 0, 1, 2 oder 3,
   wobei die Summe w + x nicht > 3 ist,
b) gegebenenfalls eine oder mehrere Siloxaneinheiten der allgemeinen Formel (VI)

   R³_{y}R⁴SiO_{[4-(y+1)]/2} (VI),

   mit
   - R³: wie R¹ in a) definiert,
   - y: 0, 1 oder 2 und
   - R⁴: eine Gruppe der Formel Aₐ-B_{b}-C_{c}-D_{d}-Eₑ-Lₗ darstellt, mit
   - a: 1,
   - b,: c, d und e 0 oder 1,
   - 1: 1 und
   a + b + c ≥ 1, wobei
   - A: ein Sauerstoffatom, eine CH₂-Gruppe oder eine CH=CH-Gruppe ist,
   - B: eine Gruppe der allgemeinen Formel (III) 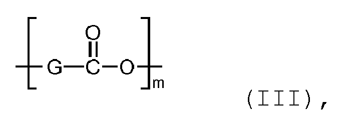 ist, wobei
   m eine ganze Zahl von 0 bis 30 ist und
   G eine zweiwertige Gruppe, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen sein kann,
   C eine CH₂-Gruppe oder ein zweiwertiger Rest, ausgewählt aus linearen oder verzweigten, gesättigten, ein- oder mehrfach ungesättigten Alkyl-, Aryl-, Alkylaryl- oder Arylalkyl-Oxygruppen mit 1 bis 20 Kohlenstoffatomen oder eine Gruppe der Formel -CH₂-O-(CH₂)₄-O- ist,
   D eine Gruppe der allgemeinen Formel (IV)

   -(C₂H₄O)ₙ(C₃H₆O)ₚ(C₁₂H₂₄O)_{q}(C₈H₈O)ᵣ- (IV),

   ist, wobei
   n, p, q und r voneinander unabhängige ganze Zahlen von 0 bis 50 sind, und falls mehr als einer der Indices n, p, q, r > 0 ist, die allgemeine Formel (IV) ein statistisches Oligomer oder ein Blockoligomer darstellt,
   E eine Gruppe der allgemeinen Formel (V) 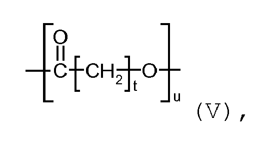 ist, wobei
   u eine ganze Zahl von 0 bis 5 ist und
   t, falls u > 0 ist, gleich oder verschieden sein kann und 3, 4 oder 5 darstellt und
   L ausgewählt ist aus der Gruppe umfassend Wasserstoffatome, lineare oder verzweigte, gesättigte, ein- oder mehrfach ungesättigte Alkyl-, Aryl-, Alkylaryl- oder Arylalkylgruppen mit 1 bis 12 Kohlenstoffatomen, Acetoxy-Gruppen, PO₃H₂-Gruppen, PO₃H^{- 1}/ᵥM^{v+}-Gruppen und PO₃^{2- 2}/ᵥM^{v+}-Gruppen mit M^{v+} ein v-wertiges Kation mit
   v 1, 2, 3 oder 4 und
c) mindestens eine Siloxaneinheit der Formel (II), die mindestens eine Sulfonatgruppe aufweist,

   R⁵_{z}R⁶SiO_{[4-(z+1)]/2} (II),

   mit
   - R⁵: wie R¹ unter a) definiert,
   - z: 0, 1 oder 2 und
   - R⁶: eine Gruppe der Formel Aₐ-B_{b}-C_{c}-D_{d}-Eₑ-F_{f}-SO₃⁻¹/ᵥ M^{v+},
   mit
   a, c und f 1,
   b und e 0 oder 1 und
   d in mindestens 70 % der Reste R⁶ = 1, wobei
   - A, B, C, D, E und M^{v+}: die Bedeutung wie in b) angegeben aufweisen können und
   - F: ein zweiwertiger Rest, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen ist und
   - M^{v+}: ein v-wertiges Kation mit v = 1, 2, 3 oder 4 ist,
enthält,
mit der Maßgabe, dass der Rest A in 5 bis 100 % der Reste A ein Sauerstoffatom und in 0 bis 95 % der Reste A eine CH₂-Gruppe und/oder eine CH=CH-Gruppe ist.

Ebenso Gegenstand der vorliegenden Erfindung ist die Verwendung einer erfindungsgemäßen Zusammensetzung bzw. der in der erfindungsgemäßen Zusammensetzung enthaltenen siliziumorganischen Verbindungen zur Herstellung eines Schaums, insbesondere eines wässrigen Schaums.

Die erfindungsgemäßen Zusammensetzungen haben den Vorteil, dass die aus ihnen erhaltenen Schäume auch auf hydrophoben und gegebenenfalls brennbaren Materialien, insbesondere Flüssigkeiten hinreichend stabil sind und damit auch auf solchen Materialien angewendet werden können. Dadurch eignen sich die aus den erfindungsgemäßen Zusammensetzungen hergestellten Schäume, insbesondere wässrigen Schäume, hervorragend als Feuerlöschschäume, Abdeckschäume oder Reinigungsschäume, insbesondere für den Einsatz in Gegenwart von hydrophoben Materialien, insbesondere hydrophoben Flüssigkeiten.

Die erfindungsgemäße Zusammensetzung hat insbesondere durch die Stabilität des daraus hergestellten Schaums ohne die Zugabe von Tensiden mit perfluorierten Gruppen den Vorteil, dass beim Einsatz der Schäume keine fluororganischen Verbindungen in die Umwelt gelangen.

Die erfindungsgemäßen Zusammensetzungen und ein Verfahren zu ihrer Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Unter Zusammensetzungen zur Erzeugung von Schäumen werden nachfolgend Zusammensetzungen verstanden, die zur Bildung von Schaum durch Einbringen von Gasblasen, insbesondere durch mechanisches Einbringen von Gasblasen und ganz besonders bevorzugt durch Einmischen von Gasblasen, insbesondere Luftblasen in Löschwasser, welches die erfindungsgemäße Zusammensetzung enthält, geeignet sind.

Die erfindungsgemäße siliziumorganische Verbindungen aufweisende Zusammensetzung zur Erzeugung von Schäumen (Schaummittel), zeichnet sich dadurch aus, dass die Zusammensetzung eine oder mehrere siliziumorganische Verbindungen enthält, die
a) mindestens eine Siloxaneinheit der Formel (I)

   R¹_{w}(R²O)ₓSiO_{[4-(w+x)]/2} (I),

   mit
   - R¹ und R²: ein oder mehrere, gleiche oder verschiedene, voneinander unabhängige Reste, ausgewählt aus linearen oder verzweigten, gesättigten, ein- oder mehrfach ungesättigten Alkyl-, Halogenalkyl-, Aryl-, Alkylaryl- oder Arylalkylresten mit 1 bis 30 Kohlenstoffatomen, wobei die Reste gegebenenfalls durch ein oder mehrere Sauerstoff- und/oder Stickstoff-Atome unterbrochen sein können und/oder am Ende des Rests gegebenenfalls eine -OC(O)CH₃ Gruppe aufweisen können,
   - w: 0, 1, 2 oder 3 und
   - x: 0, 1, 2 oder 3,
   wobei die Summe w + x nicht > 3 ist,
b) gegebenenfalls eine oder mehrere Siloxaneinheiten der allgemeinen Formel (VI)

   R³_{y}R⁴SiO_{[4-(y+1)]/2} (VI),

   mit
   - R³: wie R¹ in a) definiert,
   - y: gleich 0, 1 oder 2 und
   - R⁴: eine Gruppe der Formel Aₐ-B_{b}-C_{c}-D_{d}-Eₑ-Lₗ darstellt, mit
   - a: 1,
   - b, c, d und e: 0 oder 1,
   - 1: 1 und
   a + b + c ≥ 1, wobei
   - A: ein Sauerstoffatom, eine CH₂-Gruppe oder eine CH=CH-Gruppe ist,
   - B: eine Gruppe der allgemeinen Formel (III) 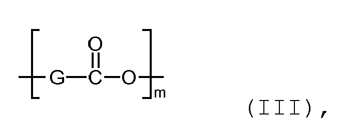 ist, wobei
   m eine ganze Zahl von 0 bis 30 ist und
   G eine zweiwertige Gruppe, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen sein kann,
   C eine CH₂-Gruppe oder ein zweiwertiger Rest, ausgewählt aus linearen oder verzweigten, gesättigten, ein- oder mehrfach ungesättigten Alkyl-, Aryl-, Alkylaryl- oder Arylalkyl-Oxygruppen mit 1 bis 20 Kohlenstoffatomen oder eine Gruppe der Formel -CH₂-O-(CH₂)₄-O- ist,
   D eine Gruppe der allgemeinen Formel (IV)

   -(C₂H₄O)ₙ(C₃H₆O)ₚ(C₁₂H₂₄O)_{q}(C₈H₈O)ᵣ- (IV),

   ist, wobei
   n, p, q und r voneinander unabhängige ganze Zahlen von 0 bis 50 sind und falls mehr als einer der Indices n, p, q, r > 0 ist, die allgemeine Formel (IV) ein statistisches Oligomer oder ein Blockoligomer darstellt,
   E eine Gruppe der allgemeinen Formel (V) 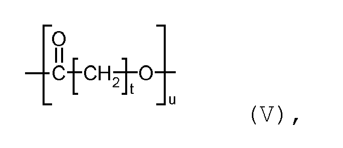 ist, wobei
   u eine ganze Zahl von 0 bis 5 ist und
   t, falls u > 0 ist, gleich oder verschieden sein kann und 3, 4 oder 5 darstellt und
   L ausgewählt ist aus der Gruppe umfassend Wasserstoffatome, lineare oder verzweigte, gesättigte, ein- oder mehrfach ungesättigte Alkyl-, Aryl-, Alkylaryl- oder Arylalkylgruppen mit 1 bis 12 Kohlenstoffatomen, Acetoxy-Gruppen, PO₃H₂-Gruppen, PO₃H^{- 1}/ᵥM^{v+}-Gruppen und PO₃^{2- 2}/ᵥM^{v+}-Gruppen mit M^{v+} ein v-wertiges Kation mit
   v 1, 2, 3 oder 4 und
c) mindestens eine Siloxaneinheit der Formel (II), die mindestens eine Sulfonatgruppe aufweist,

   R⁵_{z}R⁶SiO_{[4-(z+1)]/2} (II),

   mit
   - R⁵: wie R¹ unter a) definiert,
   - z: 0, 1 oder 2 und
   - R⁶: eine Gruppe der Formel Aₐ-B_{b}-C_{c}-D_{d}-Eₑ-F_{f}-SO₃^{- 1}/ᵥ M^{v+},
   mit
   a, c und f 1,
   b und e 0 oder 1 und
   d in mindestens 70 % der Reste R⁶ = 1,
   wobei
   - A, B, C, D, E und M^{v+}: die Bedeutung wie in b) angegeben aufweisen können,
   - F: ein zweiwertiger Rest, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen ist und
   - M^{v+}: ein v-wertiges Kation mit v = 1, 2, 3 oder 4 ist,
   enthält, mit der Maßgabe, dass der Rest A in 5 bis 100 % der Reste A ein Sauerstoffatom und in 0 bis 95 % der Reste A eine CH₂-Gruppe und/oder eine CH=CH-Gruppe ist. Vorzugsweise ist der Rest A in der Summe der Siloxaneinheiten der Formel (II) und gegebenenfalls (VI), insbesondere in Formel (II) zu 7,5 bis 75 %, bevorzugt zu 10 bis 50 % ein Sauerstoffatom.

Es kann vorteilhaft sein, wenn die Siloxaneinheiten der Formeln (I), (II) und gegebenenfalls (VI) aufweisenden siliziumorganischen Verbindungen der erfindungsgemäßen Zusammensetzungen im Mittel ein Verhältnis der Anzahl an Siliziumatomen zur Anzahl der Sulfonat-Gruppen von 1,5 : 1 bis 20 : 1, vorzugsweise von 20 : 1 bis 10 : 1, bevorzugt von 2,2 : 1 bis 4 : 1 aufweisen.

Bevorzugte erfindungsgemäße Zusammensetzungen weisen siliziumorganische Verbindungen auf, die Siloxaneinheiten der Formel (I) mit R¹ = CH₃ und x = 0, Siloxaneinheiten der Formel (II) mit R¹ = CH₃, A = Sauerstoffatom oder CH₂-Gruppe, m = 0, C = CH₂-Gruppe oder CH₂CH₂O-Gruppe, n und p = voneinander unabhängige ganze Zahlen von 0 bis 30, q = r = u = 0, F = CH₂CH₂-Gruppe oder CH₂CH₂CH₂-Gruppe und Siloxaneinheiten der Formel (VI) mit R³ = CH₃ und y = 1 oder 2 aufweisen.

Besonders bevorzugte erfindungsgemäße Zusammensetzungen weisen siliziumorganische Verbindungen auf, die Siloxaneinheiten der Formel (I) mit R¹ = CH₃ und x = 0 und Siloxaneinheiten der Formel (II) mit R⁵ = CH₃, z = 1 oder 2, A = Sauerstoffatom oder CH₂-Gruppe, m = 0, C = CH₂-Gruppe oder CH₂CH₂O-Gruppe, n = ganze Zahl von 0 bis 20, p = q = r = u = 0 und F = CH₂CH₂-Gruppe oder CH₂CH₂CH₂-Gruppe, aufweisen.

Ganz besonders bevorzugte erfindungsgemäße Zusammensetzungen weisen siliziumorganische Verbindungen auf, die durchschnittlich
0 bis 30 mol-% Einheiten der Formel (I) mit R¹ = CH₃-Gruppe, w = 1, x = 0,
0 bis 95 mol-% Einheiten der Formel (I) mit R¹ = CH₃-Gruppe, w = 2, x = 0,
0 bis 70 mol-% Einheiten der Formel (I) mit R¹ = CH₃-Gruppe, w = 3, x = 0,
10 bis 95 mol-% Einheiten der Formel (II) mit R⁵ = CH₃-Gruppe, z = 1, A-B-C = -CH₂-CH₂-CH₂-O-, n < 20, p = q = r = u = 0, F = -CH₂-CH₂-CH₂-,
0 bis 20 mol-% Einheiten der Formel (II) mit R⁵ = CH₃-Gruppe, z = 1, A = O und B-C-D-E-F-SO₃^{- 1}/ᵥ M^{v+} = -CH₂-CH₂-CH₂-SO₃^{- 1}/ᵥ M^{v+},
0 bis 20 mol-% Einheiten der Formel (II) mit R⁵ = CH₃-Gruppe, z = 2, A = O und B-C-D-E-F-SO₃^{- 1}/ᵥ M^{v+} = -CH₂-CH₂-CH₂-SO₃^{- 1}/ᵥ M^{v+},
0 bis 20 mol-% Einheiten der Formel (II) mit R⁵ = CH₃-Gruppe, z = 3, A = O und B-C-D-E-F-SO₃^{- 1}/ᵥ M^{v+} = -CH₂-CH₂-CH₂-SO₃^{- 1}/ᵥ M^{v+},
0 bis 30 mol-% Einheiten der Formel (VI) mit R³ = CH₃-Gruppe, y = 1, A-B-C = -CH₂-CH₂-CH₂-O-, m = q = r = t = u = 0, n + p < 50, C = -CH₂CH₂O- oder -CH(CH₃)CH₂O- und L ist gleich oder verschieden und ausgewählt aus der aus -CH₃, - (CH₂)₂CH₃, - (CH₂)₃CH₃, - (CH₂)₄CH₃, - (CH₂)₅CH₃, -CH₂-CH=CH₂ und -CH=CH-CH₃ bestehenden Gruppe,
0 bis 30 mol-% Einheiten der Formel (VI) mit R³ = CH₃-Gruppe, y = 1, A = O, m = q = r = t = u = 0, n + p < 50, C = -CH₂CH₂O- oder -CH(CH₃)CH₂O- und L ist gleich oder verschieden und ausgewählt aus der aus -CH₃, - (CH₂) ₂CH₃, -(CH₂)₃CH₃, -(CH₂)₄CH₃, -(CH₂)₅CH₃, -CH₂-CH=CH₂ und -CH=CH-CH₃ bestehenden Gruppe,
0 bis 30 mol-% Einheiten der Formel (VI) mit R³ = CH₃-Gruppe, y = 2, A = O, m = q = r = t = u = 0, n + p < 50, C = -CH₂CH₂O- oder -CH(CH₃)CH₂O- und L ist gleich oder verschieden und ausgewählt aus der aus -CH₃, -(CH₂)₂CH₃, -(CH₂)₃CH₃, -(CH₂)₄CH₃, -(CH₂)₅CH₃, -CH₂-CH=CH₂ und -CH=CH-CH₃ bestehenden Gruppe, und
0 bis 30 mol-% Einheiten der Formel (VI) mit R³ = CH₃-Gruppe, y = 3, A = O, m = q = r = t = u = 0, n + p < 50, C = -CH₂CH₂O- oder -CH(CH₃)CH₂O- und L ist gleich oder verschieden und ausgewählt aus der aus -CH₃, -(CH₂)₂CH₃, -(CH₂)₃CH₃, -(CH₂)₄CH₃, -(CH₂)₅CH₃, -CH₂-CH=CH₂ und -CH=CH-CH₃ bestehenden Gruppe,
aufweisen.

In den Siloxaneinheiten ist M^{v+} vorzugsweise ausgewählt aus den Kationen der Gruppe K⁺, Na⁺, NH₄⁺, (iC₃H₇)NH₃⁺, oder (CH₃)₄N⁺ oder (CH₃)₂N⁺R⁷R⁸, wobei R⁷ und R⁸ gleiche oder verschiedene Alkylreste, insbesondere solche mit 1 bis 20 Kohlenstoffatomen sind, oder eine Mischung derselben. Besonders bevorzugt ist M^{v+} K⁺ oder Na⁺.

Die erfindungsgemäßen siliziumorganische Verbindungen aufweisenden Zusammensetzungen zur Erzeugung von Schäumen können weitere übliche Zusätze aufweisen. Dies können insbesondere
a) amphotere Kohlenwasserstofftenside, wie beispielsweise Betaine und Sulfobetaine, die kommerziell z. B. unter den Handelsnamen Tego Betain F50 von Goldschmidt, Chembetain CAS (Cocoamidopropylbetain) von Chemron, Mirataine CS (Rhodia), Mackam 2CYSF (McIntyre), Deriphat D-160C (Henkel) erhältlich sind,
b) anionische Kohlenwasserstofftenside, wie beispielsweise Alkylcarboxylate, -sulfate, -sulfonate und deren ethoxylierten Derivate, insbesondere Octyl- und Lauryldipropionate, Natriumoctylsulfat, Natriumdecylsulfat, Natriumdodecylsulfat oder Ammoniumlaurylethersulfate,
c) nichtionische Kohlenwasserstofftenside, wie beispielsweise alkoxylierte Alkylphenole, lineare oder verzweigte Alkohole und deren Alkoxylate, wie beispielsweise Oleylalkoholethoxylate, Fettsäuren und deren Derivate, Alkylamine, Alkylamide, Acetylenglykole, Gemini-Tenside, wie beispielsweise Surfynol 104 (AirProducts), Alkylglycoside oder Polyglycoside, wie in US-A-5,207,932 beschrieben, oder Ethylenoxid-Propylenoxid-Blockpolyether,
d) Polymere Schaumstabilisatoren und/oder Verdicker, wie beispielsweise Proteine oder deren Abbauprodukte, wie beispielsweise teilhydrolysierte Proteine, Stärke, Polyvinylharze, wie beispielsweise Polyvinylalkohol, Polyacrylamide, Carboxyvinylpolymere oder Polypyrrolidine,
e) die in WO-A-2004/112907 offenbarte Kombination mit hochmolekularen sauren Polymeren und koordinierenden Salzen,
f) Schaumhilfsmittel, wie zum Beispiel Butyldiglycol, Glycerin, Ethylenglycolmonoalkylether, Diethylenglycolmonoalkylether, Triethylenglycolmonoalkylether, Propylenglycolmonoalkylether, Dipropylenglycolmonoalkylether, Tripropylenglycolmonoalkylether, 1-Butoxy-ethoxy-2-propanol oder Hexylenglycol,
g) Gefrierschutzmittel, wie beispielsweise Alkali- oder Erdalkalichloride, Harnstoff, Glycole oder Glycerin,
h) Zusätze gegen Ausflockungen, Separation oder Korrosion, wie beispielsweise Zitronensäure, Weinsäure, Polyaminopolycabonsäuren, Ethylendiamintetraacetate, o-Phenylphenol, Phosphatester oder Tolyltriazol,
i) Film-bildende Zusätze, wie beispielsweise die in der Schriftenfamilie DE-28 26 224, WO-A-80/01883, US-4,464,267, US-4,387,032, US-4,060,489, US-4,149,599 und US-4,060,132 beschriebenen Polysaccaride oder Xanthan, Pectin, Algin, Agar, Karrageen, Pectinsäure, Stärke, modifizierte Strärke, Alginsäure, gummi arabicum, Dextrane, Cellulose, Hydroxyalkylcellulosen, Celluloseether und -ester oder dergleichen,
j) Konservierungsmittel, wie sie kommerziell beispielsweise unter den Bezeichnungen Kathon CG/ICP (Rhom & Haas) oder Givgard G-4-40 (Givaudan) erhältlich sind,
k) Wasser, wie z. B. Süßwasser, Trinkwasser, Oberflächenwasser, Salzwasser, Meerwasser oder Brackwasser, oder
l) Zusätze, die für den Fachmann nahe liegend sind und hier nicht weiter aufgeführt sind,
sein.

Die erfindungsgemäßen Zusammensetzungen können zur Herstellung eines Schaums, vorzugsweise eines wässrigen Schaums verwendet werden. Die erfindungsgemäßen Zusammensetzungen können insbesondere zur Herstellung von Feuerlöschschäumen, Übungsschäumen oder Schäumen zur Reinigung von Anlagen oder Apparaturen, wie z. B. Tanklagern, Rohren, Pipelines oder Kesseln, zur Verringerung von Verdampfungsverlusten flüchtiger Kohlenwasserstoffe oder anderer organischer Lösemitteln, und zur Verhinderung des Entstehens von Bränden verwendet werden.

Wird eine erfindungsgemäße Zusammensetzung zur Herstellung von Feuerlöschschäumen verwendet kann es vorteilhaft sein, wenn der Zusammensetzung noch Tenside mit perfluorierten Gruppen, beispielsweise solche wie in den US-Schriften 4,060,489, 4,420,434, 4,472,286, 4,999,119, 5,085,786, 5,218,021 oder 5,616,273 beschrieben, zugesetzt werden/sind.

Die Mengen an Tensid mit perfluorierten Gruppen sind bevorzugt so zu wählen, dass ohne die erfindungsgemäßen siliziumorganischen Verbindungen bei der gegebenen Konzentration an Tensid mit perfluorierten Gruppen kein dem Stand der Technik entsprechender Löschschaum erhalten werden könnte. Auf diese Weise kann ein Löschschaum erhalten werden, der bei der Verwendung eine weiter verbesserte Löschgeschwindigkeit und eine verminderte Wiederentzündungsgefahr aufweist. Es hat sich gezeigt, dass der Gesamtgehalt an Tensiden mit perfluorierten Gruppen gleich oder geringer sein kann als die Hälfte der zur Erzeugung eines vergleichbaren Löschschaumes (Löschschaum mit vergleichbaren Lösch- und Stabilitätseigenschaften) ohne nachweisbare Mengen an siliziumorganischen Verbindungen, die Einheiten gemäß Formeln (I) und (II), wie oben definiert, aufweisen, erforderliche Konzentration an Tensiden mit perfluorierten Gruppen.

Ausgehend von der Lehre von US-5,207,932 weist eine erfindungsgemäße Zusammensetzung deshalb vorzugsweise weniger als 0,20 Gew.-% organisch gebundenes Fluor, bezogen auf die Zusammensetzung auf.

Die erfindungsgemäßen Zusammensetzungen können auf gebräuchliche Konzentrationen verdünnt werden. Typische Schaumkonzentrate weisen z. B. 1 bis 10 Massenteile, vorzugsweise 2 bis 6 Massenteile und besonders bevorzugt 3 oder 6 Massenteile der erfindungsgemäßen Zusammensetzung und 99 bis 90, vorzugsweise 98 bis 95 und besonders bevorzugt 97 bis 96 Massenteile Löschwasser, welches z. B. Süßwasser, Trinkwasser, Oberflächenwasser, Salzwasser, Meerwasser oder Brackwasser sein kann, auf. Für ein 3 Gew.-%iges Schaumkonzentrat ergibt sich bei einer Konzentration von 0,2 Gew.-% Tensiden mit perfluorierten Gruppen somit eine Konzentration an Tensiden mit perfluorierten Gruppen im Löschschaum von ca. 0,006 Gew.-%. Die Lehre gemäß dem Stand der Technik, wie sie z. B. den oben genannten Schriften US-3,849,315, US-4,038,195, US-3,957,657 und US-3,957,658 sowie den Schriften der Schriftenfamilie DE-A-28 26 224, WO-A-80/01883, US-4,464,267, US-4,387,032, US-4,060,489, US 4,149,599 und US-4,060,132 entnommen werden kann, erfordert eine fünfbis zehnfache Konzentration an Tensiden mit perfluorierten Gruppen.

Die erfindungsgemäßen Zusammensetzungen können auf verschiedenste Weise und in verschiedenen Konzentrationen hergestellt werden. Insbesondere können sie durch Abmischen hergestellt werden. Bevorzugt sind erfindungsgemäße Zusammensetzungen, die durch Mischen der siliziumorganischen Verbindungen, die Einheiten der Formeln (I) und (II) wie oben definiert aufweisen, mit amphoteren Kohlenwasserstofftensiden, anionischen Kohlenwasserstofftensiden, nichtionischen Kohlenwasserstofftensiden, polymeren Schaumstabilisatoren und/oder Verdickern, hochmolekularen sauren Polymeren und/oder koordinierenden Salzen, Schaumhilfsmitteln, Gefrierschutzmitteln, Zusätzen gegen Ausflocken, Korrosion oder Separation, Filmbildenden Zusätzen, Konservierungsmitteln, Wasser und Zusätzen, die für den Fachmann nahe liegend sind, in den Konzentrationen hergestellt werden, wie sie die in dieser Anmeldung aufgeführten Schriften lehren.

Die in den erfindungsgemäßen Zusammensetzungen enthaltenen siliziumorganischen Verbindungen können auf verschiedene Weisen hergestellt werden. So können die siliziumorganischen Verbindungen die eine Siloxaneinheit der Formel (II) aufweisen durch Addition von Wasserstoffsiloxanen an Alkenylpolyethersulfonate (Hydrosilylierung) oder durch dehydrogenativer Kondensation von Silanwasserstoff tragenden Einheiten mit anwesenden Hydroxygruppen enthaltenden Polyethersulfonaten erhalten werden.

Die Hydrosilylierung der Sulfonate von Alkenylpolyethern wird vorzugsweise in Gegenwart eines Edelmetallkatalysators, insbesondere eines Rhodium- oder Platinkatalysators durchgeführt. Bevorzugt wird der Katalysator in einer Menge von 5 bis 20 Massen-ppm eines Platin- oder Rhodiumkatalysators (Massenanteil Edelmetall in Bezug auf die Masse des Gesamtansatzes) eingesetzt. Besonders bevorzugt wird der Katalysator in Form von Hexachloroplatinsäure, cis-Platin, Di-µ-chloro-bis[chlor-(cyclohexen)platin(II)] oder Karstedt-Katalysator (gegebenenfalls in Lösungsmitteln gelöst), oder in Form von fein verteiltem elementaren Platin auf einem Trägermaterial wie Aluminiumoxid, Silicagel oder Aktivkohle eingesetzt. Die Hydrosilylierung wird vorzugsweise bei einer Temperatur von 60 bis 200 °C, bevorzugt von 70 bis 130 °C durchgeführt. Bevorzugt wird die Hydrosilylierung bei einem Druck von 0,9 bis 20 bar, bevorzugt bei 0,980 bis 2 bar durchgeführt. Es kann vorteilhaft sein, wenn die Hydrosilylierung in einem Lösungsmittel durchgeführt wird. Bevorzugt werden inerte Lösungsmittel, wie beispielsweise Xylol oder Toluol, eingesetzt. Als Lösungsmittel können aber auch Alkohole, wie z. B. 2-Butoxyethanol, Butylglycol, Butyldiglycol, Isopropanol, Ethylenglycol oder 1,2-Propandiol, Ether, wie z. B. Di(propylenglykol)butylether oder Di(propylenglykol)methylether, Polyether, wie z. B., Allyl-, Methyl-oder Butyl-gestartete Polyether oder Wasser eingesetzt werden.

Siliziumorganische Verbindungen, bei denen A in den Einheiten der Formel (VI) und (II) Sauerstoff ist, können aber auch durch dehydrogenative Kondensation von Hydroxygruppenterminierten sulfonierten Polyethern mit Wasserstoffsiloxanen erhalten werden. Vorzugsweise wird die dehydrogenative Kondensation in Gegenwart eines Katalysators durchgeführt. Geeignete Katalysatoren für die dehydrogenativen Kondensation sind beispielsweise NaOH, KOH, Tetramethylammoniumhydroxid, Alkalifluoride, Erdalkalifluoride, Borkatalysatoren wie Tris(pentafluorphenyl)boran, Carbonsäuren und/oder Carboxylate oder deren Mischungen. Die katalytische dehydrogenative Kondensation wird beispielsweise in den Schriften EP-A-1 460 098, DE-A-103 12 636 und DE-A-103 59 764, in der noch nicht veröffentlichten Anmeldeschrift DE 10 2005 051 939.3 sowie in der japanischen Patentveröffentlichung JP 48-19941, auf die die US 5,147,965 verweist, beschrieben. Auf den Inhalt der genannten Schriften wird ausdrücklich Bezug genommen und der Inhalt der genannten Schriften gilt als Teil der Offenbarung der vorliegenden Anmeldung.

Eine weitere Möglichkeit siliziumorganische Verbindungen, die Einheiten gemäß Formel (II) aufweisen, bei denen A Sauerstoff ist, bereitzustellen besteht zum Beispiel darin, Verbindungen der Formel HSO₃^{- 1}/ᵥ M^{v+} (zur Bedeutung von M siehe oben) an die Doppelbindung in Allylalkohol-gestarteten Polyethern mit OH-Terminus zu addieren. Eine solche Addition wird z. B. in DE-C-36 33 421 beschrieben. Alternativ können Polyether mit einem Sulfonat- und einem OH-Terminus auf die in der Schrift US-3,823,185 beschriebene Weise hergestellt werden. Solche OH-terminierten Polyether können anschließend, wie oben beschrieben, durch dehydrogenative Kondensation mit Wasserstoffsiloxanen umgesetzt werden. Es ist ebenso möglich, zunächst Allylalkohol gestartete Polyether dehydrogenativ mit Wasserstoffsiloxanen zu kondensieren und an die Doppelbindung der Allylgruppe Verbindungen der Formel HSO₃^{- 1}/ᵥ M^{v+} zu addieren.
Auch ist es möglich, Wasserstoffsiloxane mit Sulfonatgruppen enthaltenden und nicht-Sulfonat-modifizierten Polyethern gleichzeitig oder in beliebiger Reihenfolge umzusetzen.

Außerdem ist es möglich, Verbindungen der Formel HSO₃⁻¹/ᵥ M^{v+} nur teilweise an Polyether mit zwei Alkenyldoppelbindungen zu addieren und die verbleibenden Doppelbindungen mit Wasserstoffsiloxanen zu hydrosilylieren.

Als Sulfonatgruppe tragender Polyether kann z. B. RALU^{®}MER SPPE der Firma Raschig eingesetzt werden. Dieser kann, wie z. B. in Offenlegungsschrift DE-1 768 252 beschrieben, hergestellt werden. Vorzugsweise wird der Polyether analog Beispiel 1 der Offenlegungsschrift DE-1 768 252 (US-A-3,531,417) auf dem dem Fachmann bekannten Wege hergestellt. Besonders bevorzugt wird jedoch nicht wie im Beispiel 1 der Offenlegung DE-1 768 252 mit konzentrierter Salzsäure neutralisiert, sondern mit Hydroxypropansulfonsäure, die Eingang in die nachfolgende Umsetzung mit dem Wasserstoffsiloxan finden kann. Die Umsetzung des Allylpolyethers mit dem Propansulton kann in äquimolaren Mengen erfolgen oder aber unter Verwendung eines Überschusses an Allylpolyether oder an Propansulton. Wird ein Überschuss an Allylpolyethern eingesetzt, so kann das erhaltene Gemisch direkt in der Hydrosilylierung eingesetzt werden. Zur Zerstörung von evtl. vorhandenen Propansultonresten können geeignete Zusätze, wie beispielsweise Alkohole, Alkoholate und/oder Amine, verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beipiele 1 bis 4:

### Herstellung von siliziumorganischen Verbindungen die Si-O-C-Bindungsanteile aufweisen

Trocknung eines anionischen Polyethers:
Sofern nicht anders erwähnt, wurde das Produkt RALU^{®}MER SPPE der Fa. Raschig (Polyethylenglycolallyl(3-sulfopropyl)diether Kaliumsalz) vor den folgenden Umsetzungen durch Azeotropieren mit Toluol getrocknet. Dabei wurde eine ca. 70 Gew.-%ige Lösung des anionischen Polyethers in Toluol erhalten. Der Polyethergehalt wurde über die dem Fachmann bekannte Iodzahl bestimmt. Zur Zerstörung von Propansultonresten können in der Azeotropierung weitere Zusätze verwendet werden, wie beispielsweise Alkohole, Alkoholate und/oder Amine.

### Beispiel 1:

### Herstellung durch Hydrosilylierung:

In einem 250 ml-Dreihalskolben, der mit einem Rührer, einem Intensivkühler, einer Pilzheizhaube, einem Thermometer und einem Tropftrichter ausgerüstet war, wurden 70,8 g der aus der oben beschriebenen Trocknung erhaltenen ca. 70 Gew.-%igen Lösung des anionischen Polyethers in Toluol vorgelegt, auf 50 °C erhitzt und mit Karstedt-Katalysator (Platin-Divinyltetramethyldisiloxan-Komplex der Firma ABCR) versetzt, so dass Platin im Ansatz in einer Konzentration von 5 ppm bezogen auf das Gesamtansatzgewicht vorlag. Bei 50 °C wurden 15,0 g 1,1,1,3,5,5,5-Heptamethyltrisiloxan (Gelest) zugesetzt. Anschließend wurde weiterer Karstedt-Katalysator (10 Massen-ppm Platin bezogen auf das Gesamtansatzgewicht) zugegeben und noch 3 h bei 60 bis 70 °C nachgerührt. Nach der Entfernung des Lösungsmittels unter vermindertem Druck (Membranpumpenvakuum) wurde ein hellgelber, wachsartiger Feststoff erhalten, dessen ²⁹Si-NMR-Spektrum (erstellt mit Bruker AVANCE 400 NMR-Spektrometer mit Auswertesoftware XWIN-NMR 3,1 und Tetramethylsilan als internem Standard) unter anderem Signale der chemischen Verschiebungen von 19 ppm (Einheiten der Formel II mit R = CH₃, c = 3, R¹ = O-CH₂-CH₂-CH₂-SO₃Na; Signalintensität 17 % der (CH₃)₃SiO-Signale), -11 bis -12 ppm (Einheiten der Formel II mit R = CH₃, c = 2, R¹ = O-CH₂-CH₂-CH₂-SO₃Na; Signalintensität 28 % der (CH₃)₃SiO-Signale), -55 bis -59 ppm (Einheiten der Formel II mit R = CH₃, c = 1, R¹ = O-CH₂-CH₂-CH₂-SO₃Na; Signalintensität 22 % der (CH₃)₃SiO-Signale) und -63 bis -71 ppm (Einheiten der Formel I mit R = CH₃, a = 1, b = 0; Signalintensität 35 % der (CH₃)₃SiO-Signale) zeigt.

### Beispiel 2

### Herstellung durch Hydrosilylierung:

In einem 1-1-Dreihalskolben, der mit einem Rührer, einem Intensivkühler, einer Pilzheizhaube, einem Thermometer und einem Tropftrichter ausgerüstet war, wurden 623 g der aus der oben beschriebenen Trocknung erhaltenen ca. 70 Gew.-%igen Lösung des anionischen Polyethers in Toluol vorgelegt, auf 70 °C erhitzt und mit Karstedt-Katalysator (16 ppm Platin bezogen auf das Gesamtansatzgewicht) versetzt. Bei 70 °C wurden 125 g 1,1,1,3,5,5,5-Heptamethyltrisiloxan zugesetzt. Anschließend wurde mit 47 g Toluol verdünnt und noch 2 h bei 70 °C nachgerührt. 301 g der erhaltenen Reaktionsmischung wurden mit 39,7 g Butyldiglycol (Diethylenglycol-monobutylether ≥ 99 %, Aldrich) versetzt und das Lösungsmittel Toluol unter vermindertem Druck entfernt (Membranpumpenvakuum). Es wurde ein hellbraunes, viskoses, fließfähiges Produkt erhalten, dessen ²⁹Si-NMR-Spektrum (aufgenommen wie in Beispiel 1 beschrieben) unter anderem Signale der chemischen Verschiebungen von 19 ppm (Einheiten der Formel II mit R = CH₃, c = 3, R¹ = O-CH₂-CH₂-CH₂-SO₃Na; Signalintensität 11 % der (CH₃)₃SiO-Signale), -11 bis -12 ppm (Einheiten der Formel II mit R = CH₃, c = 2, R¹ = O-CH₂-CH₂-CH₂-SO₃Na; Signalintensität 15 % der (CH₃)₃SiO-Signale), -55 bis -59 ppm (Einheiten der Formel II mit R = CH₃, c = 1, R¹ = O-CH₂-CH₂-CH₂-SO₃Na; Signalintensität 19 % der (CH₃)₃SiO-Signale) und -64 bis -69 ppm (Einheiten der Formel I mit R = CH₃, a = 1, b = 0; Signalintensität 20 % der (CH₃)₃SiO-Signale) zeigt.

### Beispiel 3:

### Herstellung durch Hydrosilylierung:

In einem 500-ml-Dreihalskolben, der mit einem Rührer, einem Intensivkühler, einer Pilzheizhaube, einem Thermometer und einem Tropftrichter ausgerüstet war, wurden 105 g ungetrocknestes RALU^{®}MER SPPE und 16,8 g eines mit Allylalkohol gestarteten Polyethylenglycols der mittleren Molmasse 400 g/mol vorgelegt, auf 70 °C erhitzt und mit Karstedt-Katalysator (6 Massen-ppm Platin bezogen auf das Gesamtansatzgewicht) versetzt. Bei 70 °C wurden 52 g (CH₃)₃SiO- (Si (CH₃)₂O)₂₁- (HSiCH₃O)₅-OSi(CH₃)₃ (Produkt der Goldschmidt GmbH) zugetropft. Anschließend wurde 2 h bei 70 °C nachgerührt, weiterer Karstedt-Katalysator (6 Massen-ppm Platin bezogen auf das Gesamtansatzgewicht) zugegeben und noch weitere 7 h bei 70 °C nachgerührt. Es wurde ein hellgelbes, viskoses Produkt erhalten, dessen ²⁹Si-NMR-Spektrum (erhalten wie in Beispiel 1 beschrieben) unter anderem Signale der chemischen Verschiebungen von -20 bis -23 ppm (Einheiten der Formel I mit R = CH₃, a = 2, b = 0; Einheiten der Formel II mit R = CH₃, c = 1, A = CH₂-Gruppe, m = p = q = r = u = 0, C = CH₂CH₂O, n > 0, F = CH₂CH₂CH₂; Einheiten der Formel VI mit R = CH₃, x = 1, y = 1, A = CH₂-Gruppe, m = p = q = r = u = 0, C = CH₂CH₂O, n > 0, L = H-Atom; Signalintensität 18 mal Intensität der (CH₃)₃SiO-Signale) und -58 bis -61 ppm (Einheiten der Formel VI mit R = CH₃, x = 1, y = 1, A = O-Atom, m = p = q = r = u = 0, C = CH₂CH₂O, n > 0, L = CH2-CH=CH2-Gruppe; Einheiten der Formel II mit R = CH₃, c = 1, R¹ = O-CH₂-CH₂-CH₂-SO₃Na; Signalintensität 56 % der (CH₃)₃SiO-Signale) zeigt.

### Beispiel 4:

### Herstellung durch dehydrogenative Kondensation:

In einem 500-ml-Dreihalskolben, der mit einem Rührer, einem Intensivkühler, einer Pilzheizhaube, einem Thermometer und einem Tropftrichter ausgerüstet war, wurden 110 g einer 70,1 Gew.-%igen Lösung eines anionischen Polyethers der Formel HO-(CH₂CH₂O)ₙ-CH₂CH₂SO₃Na mit einer mittleren Molmasse von 380 g/mol, hergestellt gemäß dem in der Patentschrift US-3,823,185 beschriebenen Verfahren, auf 120 °C erhitzt und mit 2,5 Mol-% bezogen auf den Polyether einer 1 : 1-Mischung (molares Verhältnis) aus Laurinsäure und Cäsiumlaurat versetzt. Bei 120 °C wurden 40,7 g 1,1,1,3,3,5,5-Heptamethyltrisiloxan zugetropft. Anschließend wurde 3 h bei 120 °C nachgerührt, und das Lösungsmittel Toluol unter vermindertem Druck (Membranpumpenvakuum) entfernt. Es wurde ein hellgelbes, wachsartiges Produkt erhalten, dessen ²⁹Si-NMR-Spektrum (aufgenommen wie in Beispiel 1 beschrieben) unter anderem Signale der chemischen Verschiebungen von -10 bis -12 ppm (Einheiten der Formel II mit R = CH₃, c = 2, A = O-Atom, m = p = q = r = u = 0, n > 0, F = CH₂CH₂; Signalintensität 110 % der (CH₃)₃SiO-Signale) zeigt.

### Beispiele 5 bis 10:

### Beispiele zur Verwendung der Si-O-C-Bindungsanteile aufweisenden siliziumorganischen Verbindungen

Das Vermögen der erfindungsgemäßen Verbindungen, wässrige Schäume zu erzeugen, wurde durch Ermittlung der Verschäumungszahl geprüft. Die Verschäumungszahl ist das Verhältnis des Volumens des fertigen Schaums zum Volumen des Wasser-Schaummittel-Gemisches. Eine ausführliche Beschreibung dieser Kenngröße findet sich zum Beispiel in G. Rodewald, A. Rempe: "Feuerlöschmittel. Eigenschaften - Wirkung - Anwendung"; Kohlhammer Verlag, Stuttgart, 2005. Bei der Durchführung des Tests wurde das Rührmischwerk Power Blend MX 2050 der Firma Braun verwendet. Es wurden 100 ml einer Lösung von 0,45 Massen-% zu verschäumendes Tensid und 1,0 Massen-% des Schaumhilfsmittels Butyldiglykol in Leitungswasser von ca. 10° deutscher Härte 30 s lang verschäumt und das Volumen des gebildeten Schaums in einem Meßzylinder ermittelt. Die erhaltenen Ergebnisse sind in der Tabelle 1 zusammengefasst, wobei unter Halbwertszeit (HWZ 1) die Zeit verstanden wird, die bis zur Rückbildung der Hälfte an Flüssigkeit verstreicht. Frischer, auf diese Weise erzeugter Schaum wurde außerdem zur Löschung von n-Heptanbränden nach der beispielsweise in der Offenlegungsschrift DE-1 812 531 beschriebenen allgemeinen Methode benutzt. Es ist dem Fachmann geläufig, dass n-Heptan als definierte Modellsubstanz für Treibstoff, insbesondere für Benzin, verwendet wird. Dazu wurde analog der Offenlegungsschrift DE-2 240 263 ein Metalltrichter mit einer Trichteröffnung von 18 mm mit der Öffnung über einer Metallschale von 16 cm Durchmesser angeordnet, die 100 g n-Heptan enthielt. Das n-Heptan wurde angezündet und nach einer Vorbrennzeit von 20 s wurde mit dem Löschen durch Gießen des unmittelbar zuvor erzeugten Schaums in den Trichter begonnen. Die Ergebnisse sind in der Tabelle 1 dargestellt, wobei jeweils die Zeit in Sekunden bis zur vollständigen Löschung angegeben ist.

**Tabelle 1:**

| Parameter der Beispiele zur Verwendung | | | | | | |
|---|---|---|---|---|---|---|
| Bsp. | Formulierung in Wasser | | Schaumeigenschaften | | | |
| | Siliziumorganische Verbindung (SOV) (0, 45 Gew.-%) | Butydiglykol % | Verschäumungszahl | HWZ 1 (min) | Löschzeit (s) | Erfindungsgemäß |
| 5 | aus Bsp. 1 | 1 | 3,7 | 5,1 | 15 | ja |
| 6 | aus Bsp. 2 | 1 | 3,5 | 5 | 17 | ja |
| 7 | aus Bsp. 3 | 1 | 2,8 | 4 | 22 | ja |
| 8 | aus Bsp. 4 | 1 | 3,0 | 4,3 | 26 | ja |
| 9 | Texapon NSO | 1 | 6,0 | 6,5 | 34 | nein |
| 10 | 80 Gew.-% aus Bsp. 1 + 20 Gew.-% Texapon NSO | 1 | 5,5 | 7 | 12 | ja |

Texapon NSO ist eine 27 Gew.-%ige wässrige Natriumlaurylethersulfat-Lösung [C₁₂H₂₅-O-[(CH₂)ₛ-O]ᵥ-SO₃]Na der Fa. Cognis.

Mit Verschäumungszahlen in den bewusst einfach gewählten Formulierungen im Bereich von 3 bis 4 und Halbwertszeiten im Bereich von 4 bis 5 min eignen sich die erfindungsgemäßen Verbindungen als Schaummittel (Beispiele 5 bis 8).

Aus den Beispielen 5 bis 10 geht hervor, dass die aus den erfindungsgemäßen Verbindungen erhaltenen Schäume zum Löschen von Treib- und Heizstoffen geeignet sind. Insbesondere die Formulierungen mit den Beispielen 1 und 2 (Beispiele 5 und 6) sind Formulierungen mit nicht Siliconigen Tensiden (Beispiel 9) deutlich überlegen.

### Beispiele 11 bis 13:

### Beispiele zur Schaumstabilität

Die Stabilität der aus den erfindungsgemäßen Verbindungen erzeugten wässrigen Schäumen an hydrophoben Flüssigkeiten, wie sie in Anlagen wie Tanklagern, Rohren, Pipelines oder Kesseln, bei der Verringerung von Verdampfungsverlusten flüchtiger Kohlenwasserstoffe oder anderer organischer Lösemitteln, und bei der Verhinderung des Entstehens von Bränden angetroffen werden, wurde auf n-Heptan geprüft. Dazu wurden 15 ml n-Heptan in einer Petrischale (12 x 1 cm) vorgelegt und mit Schaum belegt, der aus jeweils 7,5 g einer 1 %igen wässrigen Lösung durch Verschäumung in einem Elegant Foamer Line M3 Schaumspender der Fa. Rexam Airspray gewonnen wurde. Es wurde die Zeit gemessen, die bis zur Halbierung der ursprünglich belegten Schaumfläche vergangen ist (HWZ 2). Die erhaltenen Ergebnisse sind in der Tabelle 2 zusammengefasst.

**Tabelle 2:**

| Schaumverhalten auf n-Heptan | | | |
|---|---|---|---|
| Beispiel | Siliziumorganische Verbindung (1,0 Gew.-%) | HWZ 2 (min) | Erfindungsgemäß |
| 11 | aus Beispiel 1 | 19 | ja |
| 12 | aus Beispiel 4 | 15 | ja |
| 13 | aus Texapon NSO | 7 | nein |

Die Ergebnisse der Tabelle 2 zeigen, dass die erfindungsgemäßen Verbindungen wesentlich stabilere Schäume auf n-Heptan als organische Tenside, die keine siliziumorganischen Verbindungen sind, (Beispiel 13) ergeben und damit für die Erzeugung von wässrigen Schäumen an/auf hydrophoben Flüssigkeiten, wie sie in Anlagen wie Tanklagern, Rohren, Pipelines oder Kesseln, bei der Verringerung von Verdampfungsverlusten flüchtiger Kohlenwasserstoffe oder anderer organischer Lösemittel und bei der Verhinderung des Entstehens von Bränden angetroffen werden, geeignet sind.

## Patentansprüche

1. Siliziumorganische Verbindungen aufweisende Zusammensetzung zur Erzeugung von Schäumen, **dadurch gekennzeichnet, dass** die Zusammensetzung eine oder mehrere siliziumorganische Verbindungen enthält, die
a) mindestens eine Siloxaneinheit der Formel (I)
R¹_{w}(R²O)ₓSiO_{[4-(w+x)]/2} (I),
mit
R¹ und R² ein oder mehrere, gleiche oder verschiedene, voneinander unabhängige Reste, ausgewählt aus linearen oder verzweigten, gesättigten, ein- oder mehrfach ungesättigten Alkyl-, Halogenalkyl-, Aryl-, Alkylaryl- oder Arylalkylresten mit 1 bis 30 Kohlenstoffatomen, wobei die Reste gegebenenfalls durch ein oder mehrere Sauerstoff- und/oder Stickstoff-Atome unterbrochen sein können und/oder am Ende des Rests gegebenenfalls eine -OC(O)CH₃-Gruppe aufweisen können,
w 0, 1, 2 oder 3 und
x 0, 1, 2 oder 3,
wobei die Summe w + x nicht größer als 3 ist,
b) gegebenenfalls eine oder mehrere Siloxaneinheiten der allgemeinen Formel (VI)
R³_{y}R⁴₁SiO_{[4-(y+1)]/2} (VI),
mit
R³ wie R¹ in a) definiert,
y 0, 1 oder 2 und
R⁴ eine Gruppe der Formel Aₐ-B_{b}-C_{c}-D_{d}-Eₑ-Lₗ darstellt,
mit
a 1,
b, c, d und e 0 oder 1,
1 1 und
a + b + c ≥ 1, wobei
A ein Sauerstoffatom, eine CH₂-Gruppe oder eine CH=CH-Gruppe ist,
B eine Gruppe der allgemeinen Formel (III) 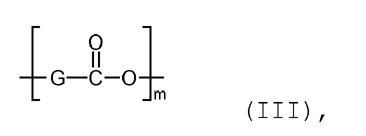 ist, wobei
m eine ganze Zahl von 0 bis 30 ist und
G eine zweiwertige Gruppe, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen sein kann,
C eine CH₂-Gruppe oder ein zweiwertiger Rest, ausgewählt aus linearen oder verzweigten, gesättigten, ein- oder mehrfach ungesättigten Alkyl-, Aryl-, Alkylaryl- oder Arylalkyl-Oxygruppen mit 1 bis 20 Kohlenstoffatomen oder eine Gruppe der Formel -CH₂-O-(CH₂)₄-O- ist,
D eine Gruppe der allgemeinen Formel (IV)
-(C₂H₄O)ₙ(C₃H₆O)ₚ(C₁₂H₂₄O)_{q}(C₈H₈O)ᵣ- (IV),
ist, wobei
n, p, q und r voneinander unabhängige ganze Zahlen von 0 bis 50 sind, und falls mehr als einer der Indices n, p, q, r > 0 ist, die allgemeine Formel (IV) ein statistisches Oligomer oder ein Blockoligomer darstellt,
E eine Gruppe der allgemeinen Formel (V) 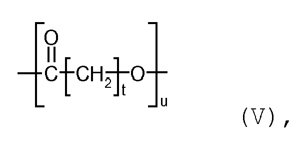 ist, wobei
u eine ganze Zahl von 0 bis 5 ist und
t falls u > 0 ist, gleich oder verschieden sein kann und 3, 4 oder 5 darstellt und
L ausgewählt ist aus der Gruppe umfassend Wasserstoffatome, lineare oder verzweigte, gesättigte, ein- oder mehrfach ungesättigte Alkyl-, Aryl-, Alkylaryl- oder Arylalkylgruppen mit 1 bis 12 Kohlenstoffatomen, Acetoxy-Gruppen, PO₃H₂-Gruppen, PO₃H^{- 1}/ᵥM^{v+}-Gruppen und PO₃^{2- 2}/ᵥM^{v+}-Gruppen mit M^{v+} ein v-wertiges Kation mit
v 1, 2, 3 oder 4, und
c) mindestens eine Siloxaneinheit der Formel (II), die mindestens eine Sulfonatgruppe aufweist,
R⁵_{z}R⁶SiO_{[4-(z+1)]/2} (II),
mit
R⁵ wie R¹ unter a) definiert,
z 0, 1 oder 2 und
R⁶ eine Gruppe der Formel
Aₐ-B_{b}-C_{c}-D_{d}-Eₑ-F_{f}-SO₃⁻¹/ᵥM^{v+},
mit
a, c und f 1,
b und e 0 oder 1 und
d in mindestens 70 % der Reste R⁶ = 1, wobei
A, B, C, D, E und M^{v+} die Bedeutung wie in b) angegeben aufweisen können,
F ein zweiwertiger Rest, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen ist und
M^{v+} ein v-wertiges Kation mit v = 1, 2, 3 oder 4 ist,
enthält,
mit der Maßgabe, dass der Rest A in 5 bis 100 % der Reste A ein Sauerstoffatom und in 0 bis 95 % der Reste A eine CH₂-Gruppe und/oder eine CH=CH-Gruppe ist.

2. Zusammensetzung gemäß Anspruch 1, **dadurch gekennzeichnet, dass** die Siloxaneinheiten der Formeln (I), (II) und gegebenenfalls (VI) aufweisenden siliziumorganischen Verbindungen im Mittel ein Verhältnis der Anzahl an Siliziumatomen zur Anzahl der Sulfonat-Gruppen von 1,5 zu 1 bis 20 zu 1 aufweisen.

3. Zusammensetzung gemäß Anspruch 1 oder 2, **dadurch gekennzeichnet, dass** die siliziumorganischen Verbindungen Siloxaneinheiten der Formel (I) mit R¹ = CH₃ und x = 0 und Siloxaneinheiten der Formel (II) mit R⁵ = CH₃, z = 1, 2 oder 3, A = Sauerstoffatom oder CH₂-Gruppe, m = 0, C = CH₂-Gruppe oder CH₂CH₂O-Gruppe, n = ganze Zahl von 0 bis 20, p = q = r = u = 0 und F = CH₂CH₂-Gruppe oder CH₂CH₂CH₂-Gruppe, aufweisen.

4. Zusammensetzung nach Anspruch 1 oder 2, **dadurch gekennzeichnet, dass** die siliziumorganischen Verbindungen Siloxaneinheiten der Formel (I) mit R¹ = CH₃ und x = 0, Siloxaneinheiten der Formel (II) mit R¹ = CH₃, A = Sauerstoffatom oder CH₂-Gruppe, m = 0, C = CH₂-Gruppe oder CH₂CH₂O-Gruppe, n und p = voneinander unabhängige ganze Zahlen von 0 bis 30, q = r = u = 0, F = CH₂CH₂-Gruppe oder CH₂CH₂CH₂-Gruppe und Siloxaneinheiten der Formel (VI) mit R³ = CH₃ und y = 1 oder 2 aufweisen.

5. Zusammensetzung nach zumindest einem der Ansprüche 1 bis 4, **dadurch gekennzeichnet, dass** die siliziumorganischen Verbindungen durchschnittlich
0 bis 30 mol-% Einheiten der Formel (I) mit R¹ = CH₃-Gruppe, w = 1, x = 0,
0 bis 95 mol-% Einheiten der Formel (I) mit R¹ = CH₃-Gruppe, w = 2, x = 0,
0 bis 70 mol-% Einheiten der Formel (I) mit R¹ = CH₃-Gruppe, w = 3, x = 0,
10 bis 95 mol-% Einheiten der Formel (II) mit R⁵ = CH₃-Gruppe, z = 1, A-B-C = -CH₂-CH₂-CH₂-O-, n < 20, p = q = r = u = 0, F = -CH₂-CH₂-CH₂-,
0 bis 20 mol-% Einheiten der Formel (II) mit R⁵ = CH₃-Gruppe, z = 1, A = O und B-C-D-E-F-SO₃^{- 1}/_{w} M^{w+} = -CH₂-CH₂-CH₂-SO₃^{- 1}/_{W} M^{w+},
0 bis 20 mol-% Einheiten der Formel (II) mit R⁵ = CH₃-Gruppe, z = 2, A = O und B-C-D-E-F-SO₃^{- 1}/_{w} M^{w+} = -CH₂-CH₂-CH₂-SO₃^{- 1}/_{w} M^{w+},
0 bis 20 mol-% Einheiten der Formel (II) mit R⁵ = CH₃-Gruppe, z = 3, A = O und B-C-D-E-F-SO₃^{- 1}/_{w} M^{w+} = -CH₂-CH₂-CH₂-SO₃^{- 1}/_{w} M^{w+},
0 bis 30 mol-% Einheiten der Formel (VI) mit R³ = CH₃-Gruppe, y = 1, A-B-C = -CH₂-CH₂-CH₂-O-, m = q = r = t = u = 0, n + p < 50, C = -CH₂CH₂O- oder -CH(CH₃)CH₂O-und L ist gleich oder verschieden und ausgewählt aus der aus -CH₃, - (CH₂)₂CH₃, - (CH₂)₃CH₃, - (CH₂)₄CH₃, -(CH₂)₅CH₃, -CH₂-CH=CH₂ und -CH=CH-CH₃ bestehenden Gruppe,
0 bis 30 mol-% Einheiten der Formel (VI) mit R³ = CH₃-Gruppe, y = 1, A = O, m = q = r = t = u = 0, n + p < 50, C = -CH₂CH₂O- oder -CH(CH₃)CH₂O- und L ist gleich oder verschieden und ausgewählt aus der aus -CH₃, -(CH₂)₂CH₃, -(CH₂)₃CH₃, -(CH₂)₄CH₃, -(CH₂)₅CH₃, -CH₂-CH=CH₂ und -CH=CH-CH₃ bestehenden Gruppe,
0 bis 30 mol-% Einheiten der Formel (VI) mit R³ = CH₃-Gruppe, y = 2, A = O, m = q = r = t = u = 0, n + p < 50, C = -CH₂CH₂O- oder -CH(CH₃)CH₂O- und L ist gleich oder verschieden und ausgewählt aus der aus -CH₃, -(CH₂)₂CH₃, -(CH₂)₃CH₃, -(CH₂)₄CH₃, -(CH₂)₅CH₃, -CH₂-CH=CH₂ und -CH=CH-CH₃ bestehenden Gruppe, und
0 bis 30 mol-% Einheiten der Formel (VI) mit R³ = CH₃-Gruppe, y = 3, A = O, m = q = r = t = u = 0, n + p < 50, C = -CH₂CH₂O- oder -CH(CH₃)CH₂O- und L ist gleich oder verschieden und ausgewählt aus der aus -CH₃, -(CH₂)₂CH₃, -(CH₂)₃CH₃, -(CH₂)₄CH₃, -(CH₂)₅CH₃, -CH₂-CH=CH₂ und -CH=CH-CH₃ bestehenden Gruppe,
aufweisen.

6. Zusammensetzung gemäß einem der Ansprüche 1 bis 5, **dadurch gekennzeichnet, dass** A in der Summe der Siloxaneinheiten der Formel (II) und gegebenenfalls (VI) zu 7,5 bis 75 % Sauerstoff bedeutet.

7. Verwendung einer Zusammensetzung gemäß einem der Ansprüche 1 bis 6 zur Herstellung eines wässrigen Schaums.

8. Verwendung nach Anspruch 7, **dadurch gekennzeichnet, dass** ein Feuerlöschschaum oder Übungsschaum hergestellt wird.

9. Verwendung gemäß Anspruch 8, **dadurch gekennzeichnet**, das der Zusammensetzung Tenside mit perfluorierten Gruppen zugesetzt werden, wobei der Gesamtgehalt an Tensiden mit perfluorierten Gruppen gleich oder geringer ist als die Hälfte der zur Erzeugung eines Löschschaumes ohne nachweisbare Mengen an siliziumorganischen Verbindungen, die Einheiten gemäß Formel (II), wie in Anspruch 1 definiert, aufweisen, erforderlichen Konzentration an Tensiden mit perfluorierten Gruppen.

10. Verwendung nach Anspruch 7, **dadurch gekennzeichnet, dass** ein Schaum zur Reinigung von Anlagen oder Apparaturen, zur Verringerung von Verdampfungsverlusten und zur Verhinderung des Entstehens von Bränden hergestellt wird.
